# EUROPÄISCHE PATENTANMELDUNG

(11) **EP 2 927 527 A2**
(43) Veröffentlichungstag der Anmeldung: **07.10.2015**
(21) Anmeldenummer: 14180855.0
(22) Anmeldetag: 13.08.2014
(51) Int. Cl.: F16D 25/08

(54) **Nehmerzylinder**

(30) Priorität: 20.09.2013 DE 102013218940
(71) Anmelder: Schaeffler Technologies AG & Co. KG, 91074 Herzogenaurach (DE)
(72) Erfinder: Rammhofer, Thomas, 77880 Sasbach (DE); Grabenstätter, Jan, 76593 Gernsbach (DE)

(57) **Zusammenfassung**

Die Erfindung betrifft einen Nehmerzylinder, der insbesondere für ein gezogenes Kupplungssystem Anwendung findet, mit einem in einem Gehäuse durch einen in einem Druckraum aufbaubaren Druck eines Druckmediums axial verschiebbar angeordneten Kolben, wobei der Kolben mittels eines Zugmittels die Übertragung einer Zugkraft auf einen Ausrückhebel einer Kupplung zur deren Betätigung gewährleistet, und der Kolben erfindungsgemäß ringförmig ausgebildet und das zwischen Kolben und Ausrückhebel angeordnete Zugmittel an dem ringförmigen Kolben befestigt ist.

## Beschreibung

Die Erfindung betrifft einen Nehmerzylinder, der insbesondere für ein gezogenes Kupplungssystem Anwendung findet.

Bei einem semihydraulischen System besteht der Nehmerzylinder im Wesentlichen aus einem Gehäuse, dem Kolben mit Abdichtung und einer Vorlastfeder. Die Vorlastfeder sorgt für eine permanente Vorlast des Ausrücklagers, damit dieses auch im druckfreien Zustand des Ausrücksystems sicher mit der Kupplung dreht und störende Geräusche zwischen Lager und Tellerfederzungen vermieden werden. Bei bekannten gezogenen Kupplungssystemen hintergreift ein Ausrücker des Kupplungsbetätigungssystems das Betätigungslager wie Ausrück- beziehungsweise Einrücklager und zieht die Tellerfederzungenspitzen in axiale Richtung.

Aus der Druckschrift DE 10 2010 024 927 A1 ist ein Kupplungsbetätigungssystem mit einem von einer Druckgebereinheit über eine Druckleitung beaufschlagbaren Nehmerzylinder mit einem in einem Gehäuse in Abhängigkeit vom an den Nehmerzylinder abgelegten Druck verlagerbaren, auf ein Betätigungslager zur Betätigung einer gezogenen Reibungskupplung einwirkenden Kolben bekannt, wobei der Nehmerzylinder vollständig in einer Kupplungsglocke untergebracht und bezogen auf eine Drehachse der Reibungskupplung bezüglich seiner Wirkachse gewinkelt angeordnet ist, wobei das Betätigungslager vom Kolben mittels eines Seilzugs betätigt wird. Der Nehmerzylinder mit dem in dessen Gehäuse axial verlagerbaren Kolben ist auf einem die Reibungskupplung umgreifenden Joch fest an dem Motorgehäuse der Brennkraftmaschine angeordnet und vollständig in der Kupplungsglocke aufgenommen und der mit dem Kolben verbundene Seilzug wird bei Verlagerung des Kolbens nach radial außen gezogen. Der Seilzug wird außen am Gehäuse des Nehmerzylinders vorbeigeführt und ist an dem Ende des Kolbens, welches dem Druckraum abgewandt ist, befestigt. Der Kolben des Nehmerzylinders weist dazu endseitig ein Druckstück auf, auf dem der Seilzug gerundet geführt und eingehängt ist. Von dort wird er zur Rolle geführt.

Nachteilig ist der erhöhte Bauraumbedarf, der dadurch entsteht, dass der Seilzug außerhalb des Gehäuses am Zylinder vorbeigeführt wird und die Umlenkrollen erforderlich sind. Weiterhin ist die auf den Kolben wirkende radiale Belastung nachteilig.

Aufgabe der Erfindung ist es, einen Nehmerzylinder, der insbesondere für ein gezogenes Kupplungssystem (pull typ) zu entwickeln, der die Übertragung einer Zugkraft auf einen Ausrückhebel einer Kupplung gewährleistet und einen geringen Bauraum benötigt.

Diese Aufgabe wird durch die kennzeichnenden Merkmale des ersten Patentanspruchs gelöst. Vorteilhafte Ausgestaltungen ergeben sich aus den Unteransprüchen.

Der Nehmerzylinder, welcher insbesondere für ein gezogenes Kupplungssystem einsetzbar ist, weist einen in einem Gehäuse durch einen in einem Druckraum aufbaubaren Druck eines Druckmediums axial verschiebbar angeordneten Kolben auf, der mittels eines Zugmittels die Übertragung einer Zugkraft auf einen Ausrückhebel einer Kupplung zu deren Betätigung gewährleistet, wobei der Kolben erfindungsgemäß ringförmig ausgebildet und das zwischen Kolben und Ausrückhebel angeordnete Zugmittel an dem ringförmigen Kolben befestigt ist. Dadurch muss das Zugmittel nicht mehr außen am Nehmerzylinder vorbeigeführt werden, wodurch sich der benötigte Bauraum reduziert.

Das Zugmittel führt dazu durch eine im Wesentlichen mittige Durchgangsöffnung des Kolbens und ist an dem, dem Druckraum abgewandten Ende des Kolbens befestigt.

Bevorzugt wird dabei das Zugmittel durch eine gehäuseseitige, im Wesentlichen zentrische Öffnung des Gehäuses zum Kolben geführt und insbesondere schwenkbar am Kolben befestigt.

Das Zugmittel kann beispielsweise in Form eines Zugseiles oder einer Zugstange ausgebildet sein, wobei vorteilhafter Weise zwischen dem Gehäuse und dem Kolben eine Vorlastfeder angeordnet ist, die mit einer Vorspannung auf das Zugseil oder die Zugstange wirkt.

Dadurch, dass der Kolben des Kunststoff- CSC (CSC = Concentric Slave Cylinder = konzentrischer Nehmerzylinder) ringförmig ausgeführt ist und ein Zugseil oder alternativ eine Zugstange durch den Kolben führt und am Kolben befestigt wird, ergibt sich gegenüber dem Stand der Technik ein geringerer Bauraumbedarf. Dabei ist das Gehäuse gestellfest und der Kolben bewegbar angeordnet, was einen weiteren Vorteil zu einem bewegten Gehäuse nach dem Stand der Technik darstellt bei dem die zu bewegende Masse in Form des Gehäuses größer ist.

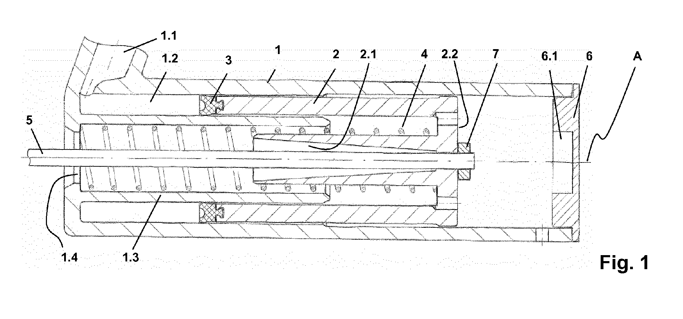

Die Erfindung wird nachfolgend anhand eines Ausführungsbeispiels näher erläutert, wobei in der zugehörigen Figur 1 ein Längsschnitt einer Variante eines erfindungsgemäßen Nehmerzylinders mit einem Zugmittel in Form eines Zugseiles dargestellt ist.

Der Nehmerzylinder weist einen Druckabgang 1.1 im Gehäuse 1 auf, der in einen ringförmig ausgeführten Druckraum 1.2 mündet. In diesem Ringspalt ist der Kolben 2 entlang der Längsachse A axial verschiebbar gelagert.

In Richtung zum Druckraum 1.2 ist am Kolben 2 eine Dichtung 3 angeordnet, die radial außen zu einem Innendurchmesser des Gehäuses 1 und radial innen zu einer inneren Hülse 1.3 abdichtet.

Die innere Hülse 1.3 ist hier einteilig mit dem Gehäuse 1 ausgebildet, kann jedoch auch separat gefertigt und mit dem Gehäuse 1 verbunden sein.

Das Zugmittel ist hier ein Zugseil 5, welches schwenkbar am Kolben 2 an dessen dem Druckraum 1.2 abgewandten Ende befestigt ist und durch eine Durchgangsöffnung 2.1 durch den Kolben 2 aus dem Gehäuse 1 über eine im Gehäuse 1 im Wesentlichen zentrische bodenseitige Öffnung 1.4 führt.

An dem der Öffnung 1.4 gegenüberliegenden Seite ist das Gehäuse 1 mit einem Gehäuseverschluss 6 versehen. Die Befestigung des Zugseiles 5 erfolgt mit einem Befestigungsmittel 7. Das Zugseil 5 reicht dabei durch die Durchgangsöffnung 2.1 des Kolbens 2 über die in Richtung zum Gehäuseverschluss 6 weisende Stirnseite 2.2 des Kolbens hinaus und wird mittels des Befestigungsmittels 7 gesichert. Das Zugseil 5 wird durch die Vorlastfeder 4, welche auf den Kolben 2 in Richtung zum Gehäuseverschluss 6 wirkt, vorgespannt, wobei das Befestigungsmittel 7 gegen die Stirnseite 2.2 gedrückt wird.

Die Hubbewegung des Kolbens 2 wird durch axiale Anschläge begrenzt. Diese Anschläge werden zum einen durch die innere Hülse 1.3 des Druckraums 1.2 und zum anderen durch den Gehäuseverschluss 6 gebildet. Der Gehäuseverschluss 6 weist in Richtung zum Kolben 2 eine Aussparung 6.1 auf, die ein Eingreifen des Befestigungsmittels 7 gewährleistet, wenn sich der Kolben 2 in seiner ausgefahrenen Endstellung befindet.

Alternativ zum Zugseil 5 kann auch eine nicht dargestellte Zugstange verwendet werden, welche drehbar/schwenkbar am Kolben 2 befestigt wird.

Um eine Schwenkbewegung des mit dem nicht dargestellten Ausrückhebel verbundenen Zugmittels zu gewährleisten, erweitert sich die Durchgangsöffnung 2.1 des Kolbens 2 in Richtung zur bodenseitigen Öffnung 1.4 des Gehäuses.

Neben der Reduzierung des Bauraumbedarfs bestehen weitere Vorteile darin, dass das Zugmittel nicht außen am Gehäuse entlangläuft und dadurch ein Verklemmen bzw. Einklemmen vermieden wird und dass die mechanischen Komponenten weitestgehend vor Schmutzeintrag geschützt sind, wodurch wiederum eine zuverlässige Wirkungsweise gewährleistet ist.

### Bezugszeichenliste

- 1: Gehäuse
- 1.1: Druckabgang
- 1.2: Druckraum
- 1.3: Hülse
- 1.4: Öffnung
- 2: Kolben
- 2.1: Durchgangsöffnung
- 2.2: Stirnseite
- 3: Dichtung
- 4: Vorlastfeder
- 5: Zugseil
- 6: Gehäuseverschluss
- 6.1: Aussparung
- 7: Befestigungsmittel
- A: Längsachse

## Patentansprüche

1. Nehmerzylinder, der insbesondere für ein gezogenes Kupplungssystem, mit einem in einem Gehäuse (1) durch einen in einem Druckraum (1.2) aufbaubaren Druck eines Druckmediums axial verschiebbar angeordneten Kolben (2), wobei der Kolben (2) mittels eines Zugmittels die Übertragung einer Zugkraft auf einen Ausrückhebel einer Kupplung zu deren Betätigung gewährleistet, **dadurch gekennzeichnet, dass** der Kolben (2) ringförmig ausgebildet und das zwischen Kolben (2) und Ausrückhebel angeordnete Zugmittel an dem ringförmigen Kolben (2) befestigt ist.

2. Nehmerzylinder nach Anspruch 1, **dadurch gekennzeichnet, dass** das Zugmittel durch eine im Wesentlichen mittige Durchgangsöffnung (2.1) des Kolbens (2) führt und an dem, dem Druckraum (1.2) abgewandten Ende des Kolbens (2) befestigt ist.

3. Nehmerzylinder nach Anspruch 1 oder 2, **dadurch gekennzeichnet, dass** das Zugmittel durch eine gehäuseseitige, im Wesentlichen zentrische Öffnung (1.4) des Gehäuses (1) zum Kolben (2) führt.

4. Nehmerzylinder nach einem der Ansprüche 1 bis 3, **dadurch gekennzeichnet, dass** das Zugmittel schwenkbar am Kolben (2) befestigt ist.

5. Nehmerzylinder nach einem der Ansprüche 1 bis 4, **dadurch gekennzeichnet, dass** das Zugmittel in Form eines Zugseiles (5) oder einer Zugstange ausgebildet ist.

6. Nehmerzylinder nach einem der Ansprüche 1 bis 5, **dadurch gekennzeichnet, dass** zwischen dem Gehäuse (1) und dem Kolben (2) eine Vorlastfeder (4) angeordnet ist, die mit einer Vorspannung auf das Zugseil (5) oder die Zugstange wirkt.
